# EUROPEAN PATENT APPLICATION

(11) **EP 0 635 459 A2**
(43) Date of publication of application: **25.01.1995**
(21) Application number: 94109256.1
(22) Date of filing: 16.06.1994
(51) Int. Cl.: C03B 11/00

(54) **Method and apparatus for pressing glass articles**

(30) Priority: 19.07.1993 US 93595
(71) Applicant: Corning Incorporated, Corning New York 14831 (US)
(72) Inventor: Gossie, Albert Mijo, Corning, NY 14831 (US); Pitbladdo, Richard Bruce, Corning, NY 14831 (US)
(74) Representative: Boon, Graham Anthony

(57) **Abstract**

The present invention relates to a method and apparatus for forming glass articles by press molding. In this process, molten glass is deposited by a gob discharge station into a female mold held by a first transfer machine. The transfer machine moves the mold containing formable material to a fixed anvil of a molding station where an article of desired shape is formed by moving a male forming member into the mold. A second transfer machine then moves the mold containing the article of desired shape to a cooling station where the glass article is cooled. The second transfer machine removes the mold from the cooling station and inverts it to separate the article from the mold. The mold is then returned to the molding station, where the first transfer machine again inverts the mold. The now empty mold is returned to the gob discharge station for deposition of a new gob of molten glass therein.

## Description

### FIELD OF THE INVENTION

The present invention relates to a method and apparatus for pressing glass articles.

### BACKGROUND OF THE INVENTION

Glass articles are conventionally manufactured by forming molten glass into a suitable configuration and cooling the article to a glass solid. In such processes, glass articles are generally formed from the molten material either by blow-molding, see U.S. patents 4,367,087; 4,427,431, or pressing.

Generally, blow molding processes are utilized to form glass containers such as bottles. Such forming techniques are not, however, suitable for the production of glass articles where very tight dimensional tolerances are required. For example, automobile headlamps, which comprise a front face with a multiplicity of lenses to focus the headlight beam and individual lenses, must be precisely formed within a tolerance of a few thousandths of an inch.

Such precisely configured glassware must be formed using a pressing process, see U.S. Patents 1,986,449 and 4,531,961.

There are several problems associated with such pressing machines. For example, if a chute is used to deliver the gob to the mold, the gob may not end up in the center of the mold. Consequently, shear marks formed on the gob when it is cut may end up in an area out of the mold which causes a defect in the surface of the formed article after pressing.

Furthermore, many glass articles have complex shapes which complicate the pressing process. For example, some headlamp lenses have rectangular shapes having dimensions such as, for example, 5" x 14". Such an oblong shape can lead to difficulties in pressing, since the gob has to spread a much farther distance in one direction compared to another. There are also problems inherent in the use of a rotating table press. One such problem is that the table rotates about a column which supports the table, while the forming station is located at the periphery of the table. Consequently, when the male forming member engages the mold, the periphery of the table may be deformed, causing the mold to misalign with the plunger. As a consequence, the mold may not be pressed uniformly. Such non-uniform pressing is likely to affect the dimensional tolerances and production rates of the product adversely. Another problem with a rotating table press occurs because the plunger is disposed on the outer periphery of the table. Such plungers are typically supported by a pair of posts, which tend to draw heat from the mold. Because there is only a single post on the opposite side of the mold (supporting the rotating table), more heat is removed from the outside of the mold. This results in temperature changes at the pressing station which can deform the press structure and, consequently, interfere with precision pressing and efficient production rates.

In addition to forming problems, rotating table presses present economic problems. Specifically, such machines are relatively large and, therefore, quite expensive from a capital and operational cost standpoint. Thus, if they are used for low volume production (e.g., a pilot run or a small order), the unit cost may be quite high. Consequently, in the past, plants utilizing rotating table presses have lost business due to their inability to fill small orders economically.

The present invention is directed to an apparatus and method for forming precision glassware which avoids the deficiencies of prior art pressing processes.

### SUMMARY OF THE INVENTION

One aspect of the present invention relates to a method of forming an article by providing a female mold into which a formable material is deposited. The mold is then moved to a molding station and deposited upon a fixed anvil at a location where the mold aligns with a male forming member. The male forming member is moved into the mold to form an article of desired shape and then removed from the mold. The mold is then moved to a cooling station, and, once the formed article is cooled, it is removed from the mold.

Another aspect of the present invention relates to a method of forming an article by providing a mold, depositing a formable material into the mold at a first location, and moving the mold in 3 dimensions to a fixed forming station. The material is then formed into an article having a desired shape at the forming station and moved to a second station. After the mold has been deposited at the second station, the article is removed, the mold is moved back to the first location, and the process is repeated.

The present invention is also directed to a method of cooling a formed article by forming an article in a mold at a fixed forming station and moving the formed article in the mold from the fixed forming station to a cooling station. The formed article is cooled at the cooling station and then removed from the mold. The empty mold is then returned to a mold transfer station, and inverted to remove residual glass pieces. The empty mold is then reinverted and the process is repeated.

Another aspect of the present invention is an article forming process where the formable material is deposited into a mold and the material is formed, within the mold, into an article having a desired shape. The material is deposited in the mold by moving the mold, either during or after the deposition of the material into the mold, to distribute the material within the mold cavity. Preferably the mold is moved, during deposition, in a direction transverse to the movement of material being deposited. In addition to transverse movement, the mold can also be moved vertically, preferably downwardly, during such depositing of formable material. Downward movement causes the gob to stretch prior to cutting of the gob, resulting in smaller cutting scars in the finished product.

The present invention also relates to a method of forming an article with temperature controlled molds. In this process, a formable material is first deposited into a female mold at a first location, while the mold is at a preselected temperature. The mold containing the formable material is moved to a molding station where the formable material is molded to a formed article. The mold is then moved to a cooling station where the formed article undergoes cooling. After the formed article is removed from the female mold, the mold is returned to the first location where more formable material is deposited therein. The temperature of the female mold is measured after removal of the formed article, and cooling of the formed article at the cooling station is controlled in response to that temperature measurement, so that the mold will have the desired preselected temperature at the first location. Further temperature control is achievable by providing passages in the male forming member of the molding station through which heat transfer fluid for heating or cooling that member can be circulated. In addition, particularly at start-up of the process, female molds can be heated, preferably by bringing an induction heating coil proximate to the female mold.

The present invention also relates to a system or apparatus for forming a glass article, suitable for carrying out the method and the various aspects mentioned above as apparent from the following description and the claims.

The method and apparatus encompassed by the above-described aspects of the present invention have numerous advantageous over prior art press forming systems.

One advantage is provided by the present invention's utilization of a symmetrical force-support press with a fixed anvil. This prevents asymmetric forces on the male forming member of the press and on the female mold. By contrast, the rotating table systems utilized in prior press forming units are supported at their center, while forming occurs at the periphery of the rotating table. In such devices, the table is not symmetrically loaded, and asymmetrical forces are introduced at the press. As noted above, asymmetric loading force is likely to deform molds and cause product to fail to meet dimensional specifications and desired production selection rates. Such problems are unlikely to be encountered when the fixed anvil of the present invention is utilized.

Another advantage over prior press forming operations is the present invention's transverse movement of the mold relative to the path followed by gobs dispensed from the gob discharge station. As mentioned above, the mold can alternatively be moved after the gob distribution step to achieve the same effect. Such movement distributes the gob within the mold so that the gob can be pressed more uniformly and with less plunger work into the desired configuration of the formed article. This is particularly advantageous where the female mold has a configuration which might otherwise prevent adequate spreading of the gob during pressing, such as, for example, oblong-shaped molds.

The present invention's precise control of mold temperature is also beneficial, because the final surface condition of the pressed glass is highly dependent upon the mold's temperature during forming. If the mold is too cold, the resulting glass is likely to exhibit visible "chill" marks. Further, if the glass cools too quickly, excessive breakage of the glass can occur.

Since press forming operations are utilized to produce articles with tight tolerances, precise alignment between the female mold and the male forming member is highly desirable. In the present invention, such alignment is achieved by providing a ring with a series of teeth beneath each mold. Fixed to the top of the anvil is another ring with an upper surface having similar teeth so that teeth of each ring can mate and precisely align the mold with the male forming member. This arrangement also facilitates placement of female molds on the anvil of the press.

The system of the present invention is also more flexible than prior glass pressing devices, which only operate efficiently at high production rates and can only produce one type of article in a given operational run. By contrast, the system of the present invention can be efficiently operated at widely varying production parameters. In particular, this system can be operated so that a single gob discharge station can feed molten glass to one or a plurality of molding stations. Moreover, the number of molds processed in the system can be varied depending upon production requirements. The use of a single gob discharge station to feed a plurality of molding stations also permits each molding station to produce a different molded article, to mold a gob of different weight, or to produce a different number of articles per unit time. Such flexibility is generally achieved through the use of a programmable gob feeder and an overall system controller (e.g., a microprocessor). The operational flexibility of the present invention is facilitated by the ability to precisely control the mold temperature, regardless of whether the system is operated at a high production rate (which tends to generate excess heat) or at a low production rate (wherein the male forming members may need to be heated).

In view of all these advantages, it is apparent that the system of the present invention constitutes a significant advance over prior glass press forming operations.

### BRIEF DESCRIPTION OF THE DRAWINGS

Figure 1 is a perspective view of a system for forming glass articles according to the present invention.

Figure 2 is a top view of the system illustrated in Figure 1.

Figure 3 is a perspective view of the gob discharge and press molding stations for the system of Figure 1, showing the movement of the robot transfer machine between these stations.

Figure 4 is a perspective view showing sequences for fabrication and use of a mold in accordance with the present invention.

Figures 5A to 5E are top views of the system of Figure 1, showing the sequence of movement by the robot transfer machines.

Figure 6 is a perspective and schematic view of the cooling station of Figure 1.

Figure 7 is a perspective view of a preferred press molding station in accordance with the present invention; and Figure 8 is a partial side cross-sectional view of the press molding station of Figure 7.

### DETAILED DESCRIPTION OF THE DRAWINGS

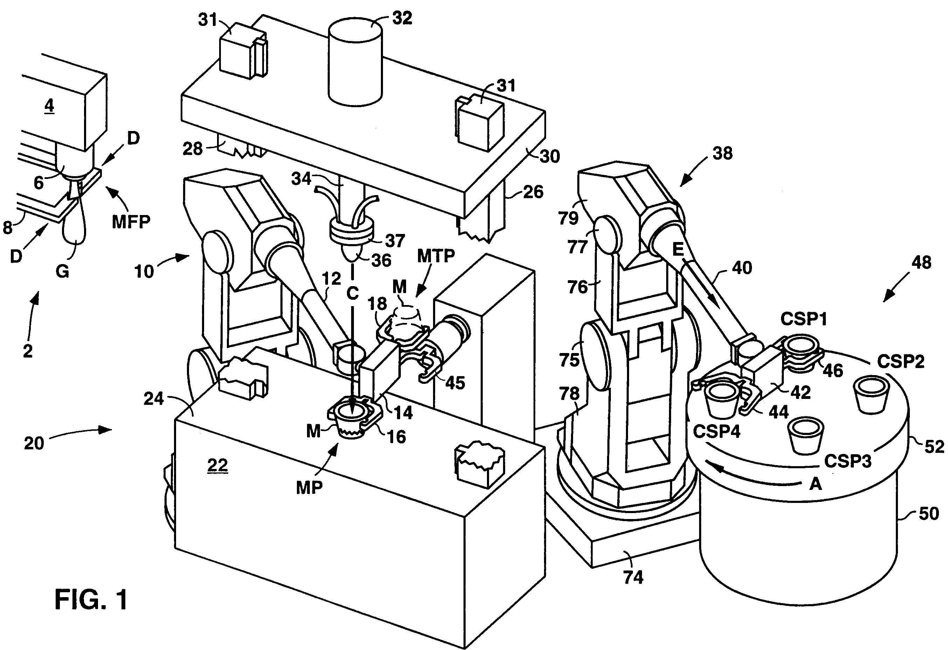

Figure 1 is a perspective view of a system for forming glass articles according to the present invention. This system includes gob discharge station 2 where molten glass is discharged from gob dispenser 4 through nozzle 6. Gob G is cut by moving cutters 8 in the direction depicted by arrows D. Once the gob is cut, the cutters are moved in a direction opposite that of arrows D.

The system also includes a robot transfer machine 10 to move molds M from gob discharge station 2 to molding station 20. Transfer machine 10 includes arm 12 joined to gripper connector 14. Extending from gripper connector 14 are grippers 16 and 18.

Molding station 20 includes anvil 22 having top surface 24. Column 26 and 28 extend upwardly from top surface 24 of anvil 22 to support transverse member 30. Caps 31 at the top of columns 26 and 28 hold transverse member 30 in position. Drive unit 32, which is supported on transverse member 30, drives ram 34, male forming member 36, and press ring 37 downwardly along the path defined by arrow C to form a shaped article in mold M when located at molding position MP. Male forming member 36 remains in contact with glass and mold M at this position until the molten glass within the mold cools sufficiently to retain the shape imprinted in it by male forming member 36 and the mold M. Male forming member 36, press ring 37, and ram 34 are then retracted, by drive unit 32, in a direction opposite that defined by arrow C. Drive unit 32 can be operated electrically, pneumatically, or hydraulically, depending on the magnitude of applied force required.

The system of the present invention also includes robot transfer machine 38, having arm 40 joined to gripper connector 42. Extending from gripper connector 42 are grippers 44 and 46. Transfer machine 38 conveys molds M from the molding position MP on molding station 20 to cooling station position CSP1 at cooling station 48. In addition, transfer machine 38 moves cooled empty molds from cooling station position CSP4 to mold inversion gripper 45.

Inversion gripper 45 removes the mold from gripper 44 of transfer machine 38, and inverts the mold so that residual glass pieces are removed. At mold transfer position MTP, gripper 18 of robot transfer machine 10 takes inverted, empty mold M from gripper 45.

Cooling station 48 includes support 50 upon which rotating cooling table 52 is placed. Cooling table 52 rotates in the direction defined by arrow A so that molds on the cooling table are advanced, by a conventional indexing mechanism, seriatim from cooling station position CSP1 to CSP2 to CSP3 to CSP4. Although the present invention is herein described with four cooling station positions, it should be understood that the number can be increased or decreased as desired. As molds follow this path, their temperatures become lower and lower. At cooling station position CSP4 a conventional vacuum take-off conduit (not shown) connected to a source of vacuum (also not shown) is lowered into contact with the formed article in that mold. The applied suction to the take-off conduit separates the article from the mold. The article is then transferred by the take-off conduit to a suitable product transfer machine (not shown) such as, for example, a conveyor belt. The empty mold is then removed from cooling table 52 at cooling station position CSP1 by gripper 44 of transfer machine 38.

Transfer machine 38 includes support 78 which is mounted on one end to a base 74 and on the other end to pivot 75. Connector 76 is joined at one end to pivot 75, while opposite end is joined to pivot 77. Mounted on pivot 77 is shoulder 79 from which arm 40 extends.

Once the material within mold M has been shaped by male forming member 36 at mold forming position MP, mold M can be grasped by gripper 46, brought to cooling station position CSP1, and released. Gripper 44 can then grasp the mold M at cooling station position CSP4 and remove it from cooling table 52. The mold held by gripper 44 is then advanced to mold transfer position MTP by arm 40 of transfer machine 38. At MTP, the mold is grasped by gripper 45 and released by gripper 44. Gripper 45 then inverts the mold 180 degrees so that residual glass pieces are removed therefrom. The mold is then ready to be transferred from gripper 45 to gripper 16 or 18 of transfer machine 10. Meanwhile, transfer machine 38 is ready to pick-up another mold with formed material therein from mold forming position MP.

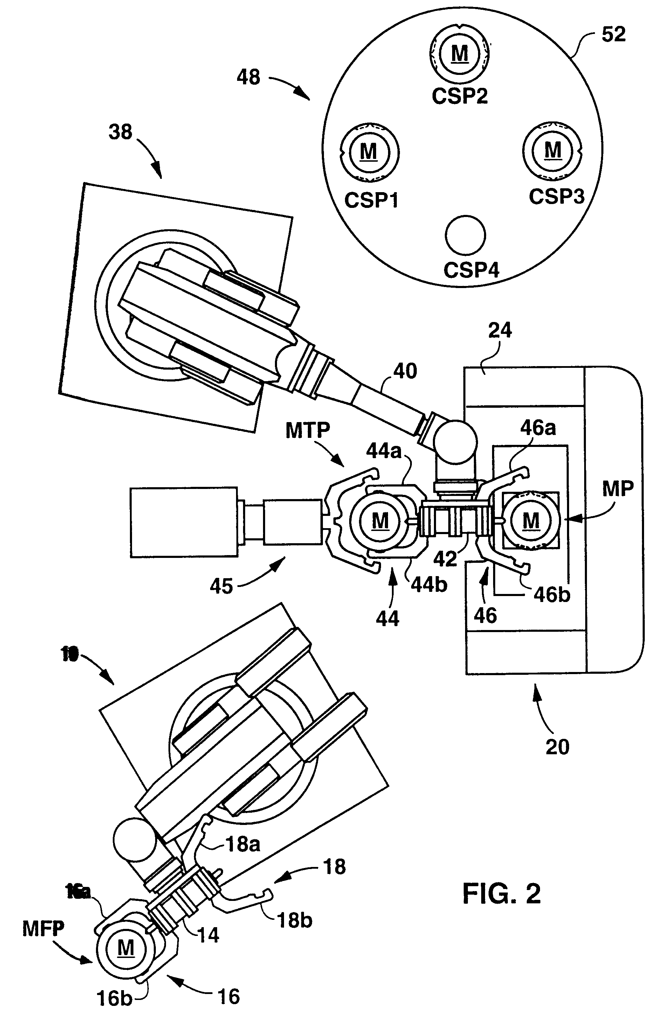

Figure 2 is a top view of the system of Figure 1. In the embodiment depicted in Figure 2, grippers 16 or 18, but not both, of transfer machine 10 hold a mold M at a given time. Likewise, only one of grippers 46 or 48 of transfer machine 38 hold a mold M at a given time. Such mold grasping is accomplished with fingers 16a and 16b of gripper 16, fingers 18a and 18b of gripper 18, fingers 44a and 44b of gripper 44, and fingers 46a and 46b of gripper 46. As a result, when mold M is deposited at mold filling position MFP, it is held by fingers 16a and 16b of gripper 16, while fingers 18a and 18b of gripper 18 are empty. Likewise, fingers 16a and 16b of gripper 16 hold mold M when it is deposited at molding position MP, while fingers 18a and 18b of gripper 18 surround, but do not hold, mold M at mold transfer position MTP, when held by gripper 45. Turning to the grippers of transfer machine 38, as shown in Figure 2, fingers 44a and 44b of gripper 44 hold mold M when mold M is deposited at mold transfer position MTP. At that same point in time, fingers 46a and 46b of gripper 46 surround but do not hold mold M at mold forming position MP.

From Figures 1 and 2, it is apparent that transfer machine 38 does not effect mold inversion. As a result, gripper 46 always grasps mold M with a formed article from mold forming position MP on top surface 24 and transfers that mold to cooling station position CSP1 on cooling table 52. Likewise, gripper 44 of transfer machine 38 always grasps a cooled, empty mold at cooling station position CSP4 and moves it to mold transfer position MTP where its grasped by inversion gripper 45.

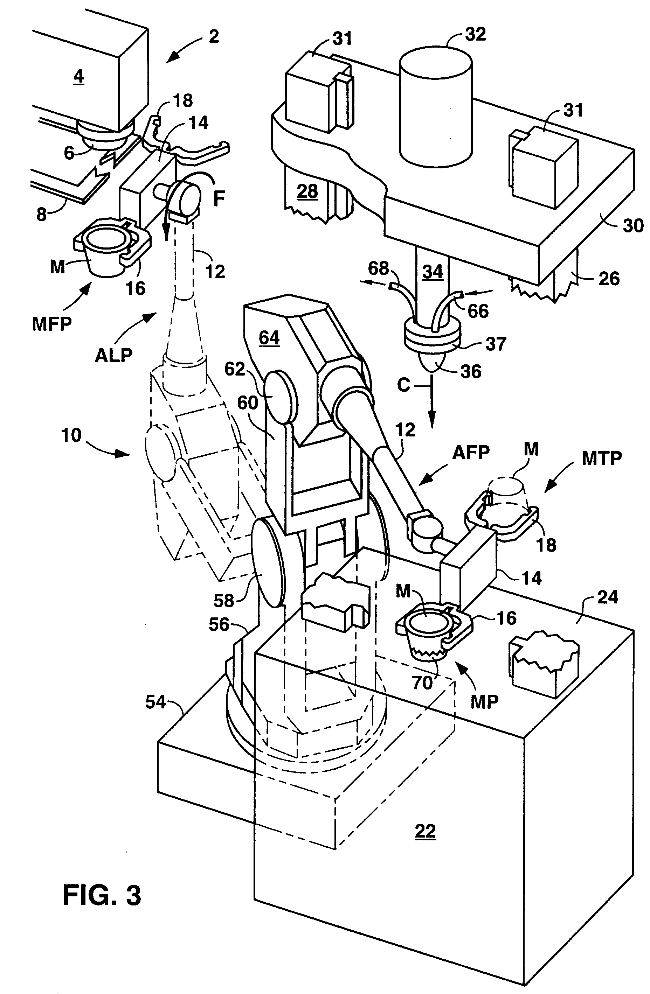

Figure 3 is a perspective view of gob discharge station 2 and molding station 20 for the system of Figure 1 showing the movement of the transfer machine between these stations. As shown, transfer machine 10 is capable of being moved from the position, shown in solid, where arm 12 is at position AFP, to the position where arm 12 is at position ALP (shown in phantom). Such movement is provided by the operation of the components of transfer machine 10. These components include base 54 on which is mounted support 56 which is, in turn, connected to pivot 58. Connector 60 is joined at one end to pivot 58, while its opposite end is joined to pivot 62. Mounted on pivot 62 is shoulder 64 from which arm 12 extends.

To receive a gob of formable glass, transfer machine 10 is moved to position ALP (shown in phantom) so that the mold can receive molten glass from gob discharge station 2. More particularly, gripper 16 of mold transfer station 10 holds mold M in appropriate position to receive a gob of molten glass from dispenser 4. Molten glass within dispenser 4 is passed through nozzle 6, cut by cutters 8, and dropped as a gob into mold M at mold filling position MFP. Desirably, transfer machine 10 is used to evenly distribute the glass gob within mold M. This can be accomplished using a variety of techniques. For example, during filling, mold M may be moved transversely to the path of the gob, defined by arrow 1, so that, as the gob contacts the mold cavity of mold M, the gob evenly distributed therein. For example, by appropriate transverse movement of the mold, the leading edge of a gob can be deposited at one end of a mold while the trailing end of the gob is deposited at the other end.

Another method to accurately distribute the gob within the mold is to tilt the mold during the gob feeding operation. This technique is especially useful for complex shaped parts, such as, for example, those bearing a deep recess into which the glass gob tends to flow (by gravity). By tilting the mold, flow of the gob into such a recess can at times be avoided.

A third method for distributing the gob within the mold is by centrifugal forces caused by appropriate movement of the mold either during or after deposition of the gob. Such forces can be applied using relatively rapid transverse movement, or the movement of the transfer machine 10 in transporting the mold to the mold forming station, or conceivably such forces could be applied to the mold using ultrasonic techniques. Thus, such forces could also be applied while the mold is being transferred from the gob station to the forming station.

Additionally, in a preferred embodiment mold M is moved vertically downward while being filled at mold filling position MFP. This causes the gob to stretch. Consequently, when the gob is cut, the cutting mark left by the shears is smaller.

Once a gob has been deposited in mold M at mold filling position MFP, transfer machine 10 is moved to the position shown in solid in Figure 3 where arm 12 is at position AFP. Gripper 16 then places mold M at mold forming position MP and releases the mold. Next, gripper 18 (not gripper 16) grabs inverted and empty mold M, held by inverting gripper 45, which is shown in phantom at mold transfer position MTP. Transfer machine 10 then reinverts empty mold M and returns to the position shown in phantom where arm 12 is at position ALP, only this time gripper 18 holds mold M in position to receive a molten glass gob. Once arm 12 has moved from position AFP, ram 34, press ring 37, and male forming member 36 are advanced downwardly along the path defined by the arrow C to produce a formed article within mold M at mold forming position MP.

To effectuate reinversion of the inverted mold, while transfer machine 10 is moving arm 12 from position AFP to position ALP, gripper 18 rotates 180 degrees along the path defined by arrow F so that the mold held by gripper 18 is inverted and placed in mold filling position MFP. In position MFP, the mold is then filled with a gob of molten glass, as discussed above.

As shown in Figure 3, the temperature of male forming member 36 is controlled by passing a heat transfer fluid through inlet line 66 into a passage (not shown) within male forming member 36, and out through outlet line 68. In steady state operation, particularly at high production rates, it may be necessary to pass a cooling fluid through conduits 66 and 68 as well as the passage within male forming member 36. This will cool male forming member 36 and prevent excessive heating of the mold M at mold forming position MP as well as the material therein. At operation start-up or at low production rates, it may be necessary to pass a heating fluid through conduits 66 and 68 as well as the passage within male forming member 36. Examples of suitable cooling fluids include cooling water, air and heat transfer oil. Examples of heating fluids which can be utilized include steam and heat transfer oil. Suitable male forming members 36 and ring 37 can be obtained, for example, from the Mokon Division of Protective Closures Co., Inc., Buffalo, New York.

In another form of the present invention, illustrated in Figure 3, independently driven press ring 37 surrounds and is used in conjunction with male forming member 36. Male forming member 36 and press ring 37 typically travel together but are independently driven. Like male forming member 36, this ring is provided with a passage for circulation of a heat transfer fluid.

During start-up, it may be necessary to heat molds M to raise their temperatures to a level suitable for filling with gobs of molten glass and for forming the gobs therein. Desirably, such heating is achieved by bringing an induction heating coil (not shown) proximate to the molds of the system for a time sufficient to elevate the molds' temperatures to an appropriate level. Alternatively, heating fluid can be circulated through inlet and outlet conduits 66 and 68, respectively.

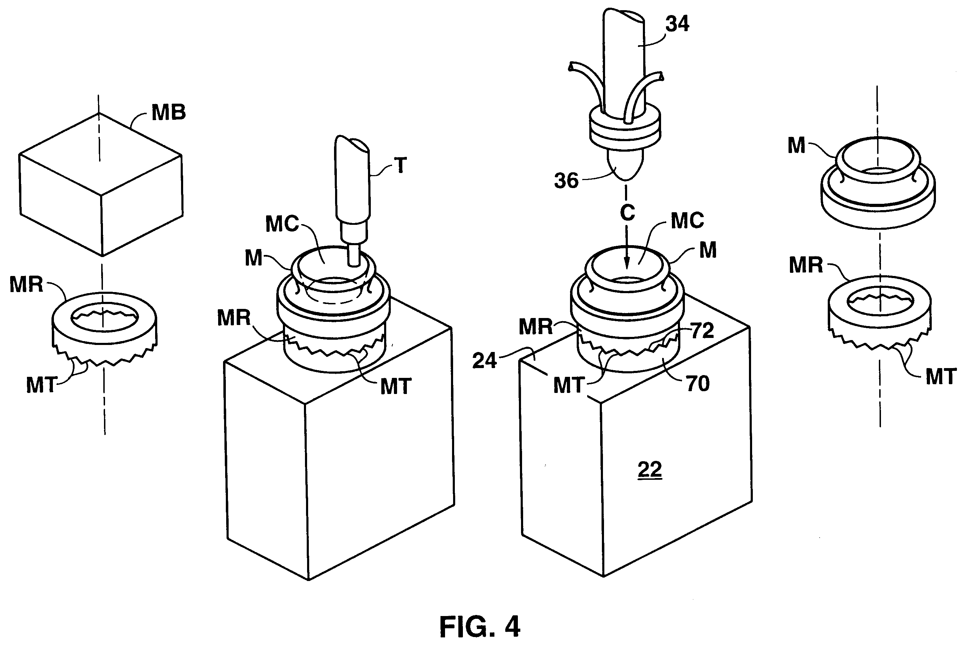

As also shown in Figure 3, mold M is fixedly aligned with respect to male forming member 36 by providing top surface 24 of anvil 22 with a ring 70 thereon having upwardly facing teeth which engage corresponding downwardly facing teeth on the bottom of mold M. This is shown in more detail in Figure 4, which is a perspective view showing the sequence for fabrication and use of such a mold.

As depicted in Figure 4, block MB, which is formed from a material suitable for molding glass (e.g., cast iron or stainless steel), is joined to mold ring MR having teeth MT. A suitable exterior configuration and mold cavity MC are then formed in mold block MB with cutting tool T to form mold M. In use, mold M is located so that teeth MT of ring MR engage with teeth 72 of ring 70 which is integral with surface 24. Ram 34 and male forming member 36 are then advanced along the path defined by arrow C to produce a shaped article within mold M. By placing teeth MT of ring MR in engagement with teeth 72 of ring 70, mold M is fixedly aligned with the path of travel of male forming member 36 so that the article formed within cavity MC meets tight dimensional tolerances. After repeatedly using mold M for such forming operations, it will become worn and no longer suitable for use in producing precision products. Mold M can then be discarded, while ring MR can be reused with a mold formed from a new block MB.

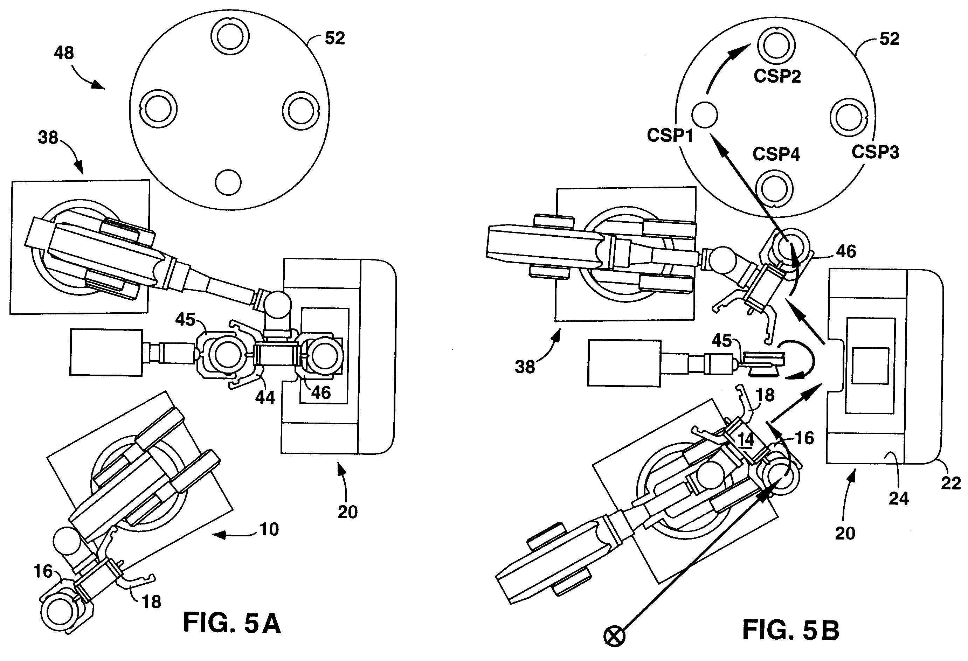

Figures 2 and 5A-5E are top views of the system of Figure 1, which combine to illustrate the sequence of movement by transfer machines 10 and 38 in a preferred embodiment of the invention.

In Figure 2, transfer machine 10 holds a mold within gripper 16 at mold filling position MFP, where a gob of molten glass is about to be transferred from gob discharge station 2 to the mold. At this point, gripper 18 does not hold a mold. Meanwhile, transfer machine 38 is positioned so that a mold which has just been shaped at molding station 20 is about to be grabbed by gripper 46. Gripper 44 holds an empty mold, and is about to transfer this empty mold to inversion gripper 45.

In Figure 5A, the mold held by gripper 16 of transfer machine 10 has received a gob of molten glass from mold filling position MFP. Gripper 18 is not holding a mold. Gripper 46 of transfer machine 38 has grabbed the mold from the forming station for transportation to cooling station 48. Gripper 44 has released the mold it was holding in Fig. 2, and this mold is now being held by inversion gripper 45.

Figure 5B shows gripper 16 of transfer machine 70 transporting a mold, which now has a moldable glass gob therein, to the molding station. To do so, arm 12 rotates downwardly and extends outwardly towards the upper surface 24 of anvil 22, as indicated by the directional arrows, while at the same time gripper connector 14 rotates appropriately to counter-clockwise enable precise placement of the mold by gripper 16 onto the top surface 24 of anvil 22 at molding station 20. Preferably, these movements are carried out at the same time in one fluid motion. At the same time, gripper 46 of transfer machine 38 is transferring a mold from molding station 20 to rotating cooling table 52 for cooling. To do so, gripper 46 of transfer machine 38 is first lifted an amount sufficient to clear anvil 22. Then, as indicated by the directional arrows, appropriate retraction of arm 40 and rotation of gripper connector 42 results in transport of the mold to CSP1 of cooling station 48, whereupon gripper 46 will lower the mold onto cooling table 52. The mold will then rotate through the various cooling stations CSP1, CSP2, CSP3, and CSP4. At CSP4, the mold will have cooled sufficiently to enable removal of the molded object, at which point the molded article will be removed from the mold using a vacuum take-off conduit (not shown). Meanwhile, inversion flipper 45 has completed one-half (i.e., 90 degrees) of an inversion of the empty mold it is holding.

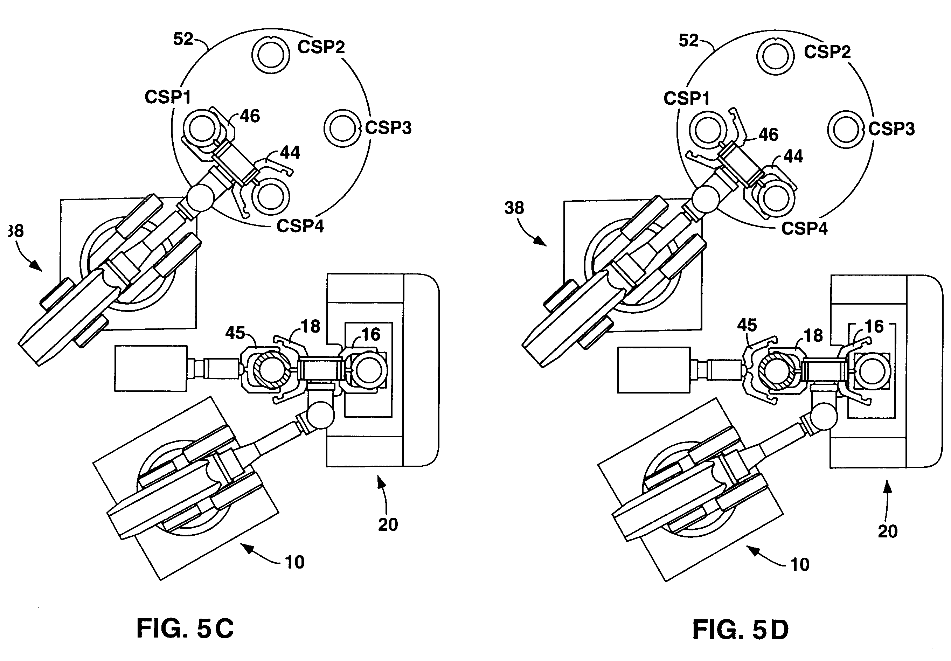

In Fig. 5C, gripper 16 of transfer machine 10 has successfully transported a mold having a molten glass gob therein to the molding station and is about to release it. Gripper 46 of transfer machine 38 has successful transported and lowered a mold onto CSP1 of rotating cooling table 52. A vacuum takeoff conduit (not shown) has removed the molded article from the mold at CSP4 of cooling table 52, and gripper 44 of transfer machine 38 is positioned to grasp this empty mold from CSP4 of cooling table 52. Inversion flipper 45 has completed a full 180 degree inversion of the empty mold it is holding, and is ready to transfer this mold to grippers 18 of transfer machine 10.

In Fig. 5D, gripper 16 of transfer machine 10 has released its mold, which is now in position for forming at molding station 20. Gripper 46 of transfer machine 38 has released a mold onto position CSP1 of cooling table 52, and gripper 44 of transfer machine 38 has grabbed onto a now cooled and empty mold located at CSP4 of cooling table 52, for transporting to inversion gripper 45. Inversion gripper 45 has released and transferred a now inverted mold to grippers 18 of transfer machine 10 for subsequent reinversion and transport to gob station 2.

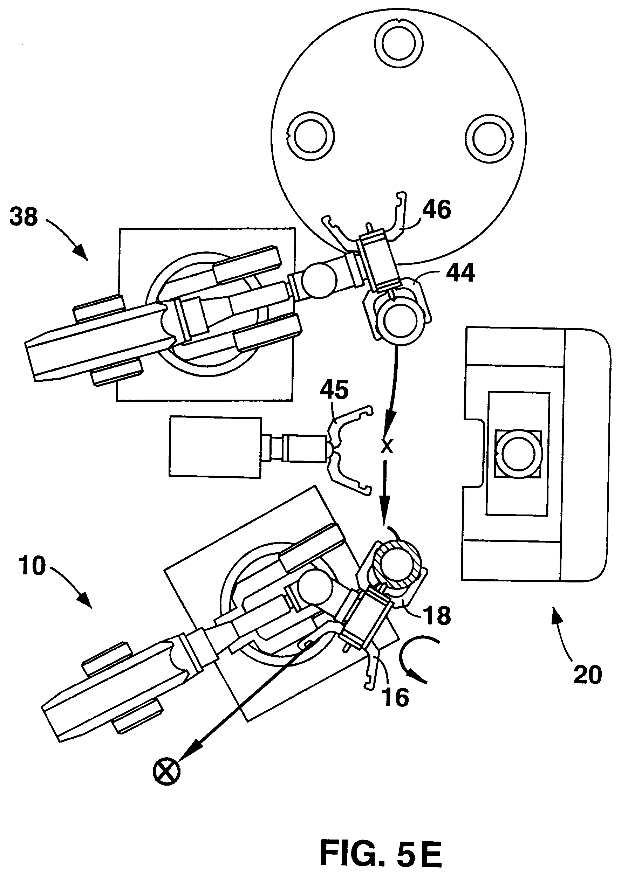

In Fig. 5E, the mold at molding station 20 is being pressed (not shown). Gripper 44 of transfer machine 38 is transporting an empty mold via the path indicated to inversion gripper 45. Gripper 46 of transport machine 38 and inversion gripper 45 are both empty. Gripper 18 of transport machine 10 is inverting and at the same time transporting the previously inverted mold to gob station 2 as indicated by the arrows. The sequence illustrated in Figs. 2 and 5A through 5E then repeats.

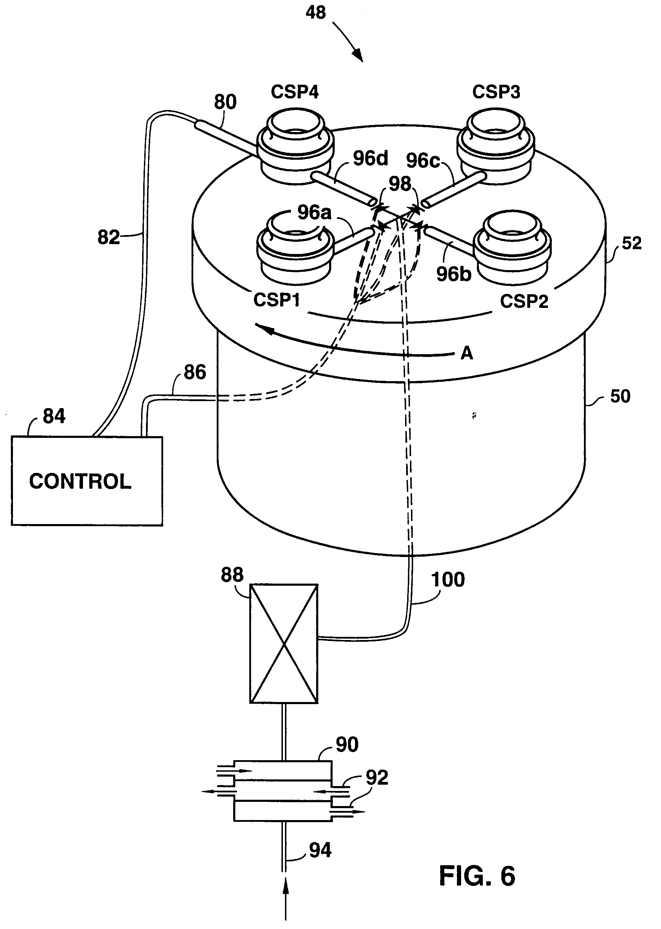

Figure 6 is a perspective view of the cooling station of Figure 1. In cooling station 48, gas in conduit 94 is passed through heat exchanger 90 where the gas is indirectly cooled by coolant passing through tubes 92. The resulting cooling gas is then conveyed by blower 88 through feed line 100. Within cooling station 48, feed line 100 diverges into passages 96a-d leading to cooling station positions CSP1-CSP4, respectively. Each of passages 96a-d are provided with one of valves 98a-d, respectively, to control the volumetric flow of coolant gas to each of cooling station positions CSP1-CSP4, respectively. Operation of these valves is regulated by controller 84, having control line 86 leading to each of the valves. Controller 84 operates in response to temperature readings of the mold at cooling station position CSP4 after the formed article is removed. These temperature values are detected by pyrometer 80 and conveyed to controller 84 through control line 82. In this manner, the temperature of molds at that position can be maintained, so that their temperatures when recycled to mold filling position MFP are suitable for receipt of molten glass gobs. Pyrometer 80 thus continually provides mold temperature data back to controller 84 through control line 82, and controller 84 is programmed to utilize that information to control gas flow at cooling stations CSP1 through CSP4 of cooling station 48. The cooled formed articles are then removed by vacuum take-out conduit 51 (not shown).

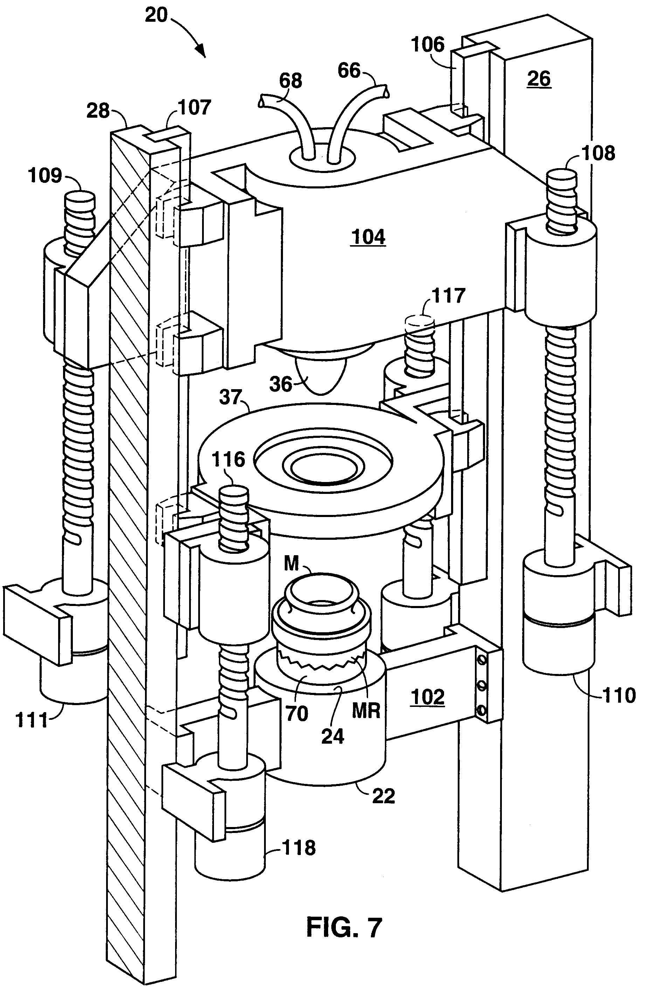

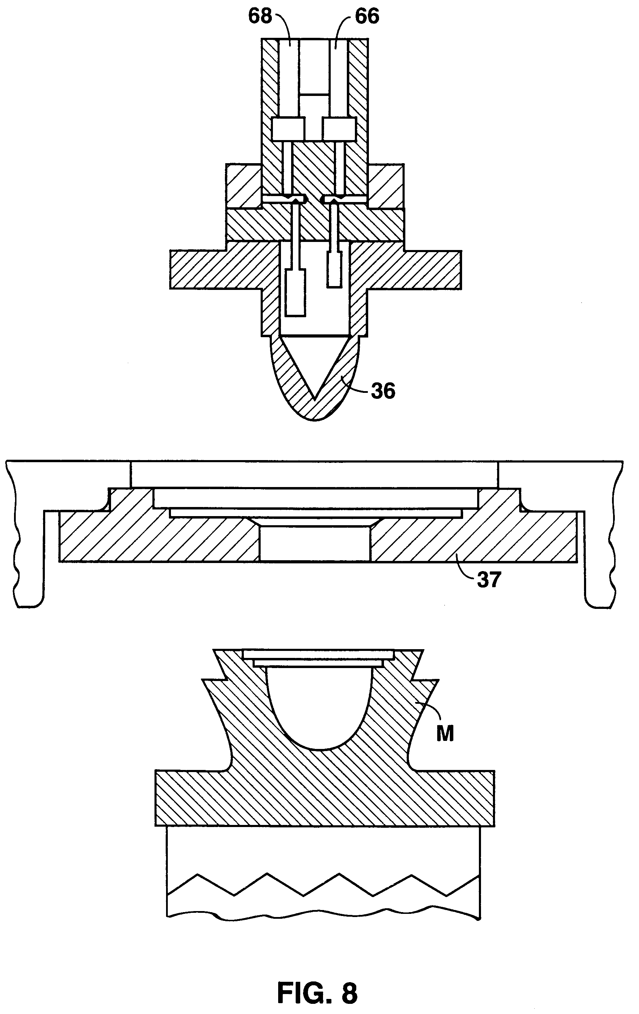

Figures 7 and 8 illustrate a preferred embodiment of pressing station 20. Figure 7 is a perspective view, while figure 8 is a partial schematic view to facilitate understanding of the invention. As best illustrated in Figure 7, molding station 20 includes anvil 22 having top surface 24. Anvil 22 is supported by support braces 102, which in turn are supported by columns 26 and 28. Transverse member 104, which supports male forming member 36, is aligned for vertical movement by keyway 106 and 107 on columns 26 and 28, respectively. Transverse member 104 is supported and driven upwardly and downwardly by appropriate rotation of screws 108 and 109, which are in turn driven by drive units 110 and 111. Similarly, mold ring 37 is supported by its own transverse portion which is retained within keyways 106 and 107 of columns 26 and 28, and driven upwardly and downwardly by appropriate rotation of screws 116 and 117. Drive screw 116 is driven by drive unit 118, while drive unit 117 is driven by a similar drive unit (not shown.)

The male pressing member and mold ring 37 are shown separated in figures 7 and 8 for purposes of explanation. However, preferably, during operation, mold ring 37 and male forming member 36 move together upwardly and downwardly during the pressing operation. The purpose of mold ring 37 is to prevent overflow of molten glass from mold M as much as possible during the pressing operation. As illustrated in the figures, the temperature of the male forming member 36 can be controlled by appropriate circulation of a heat transfer fluid through conduit 66 and 68. Similar heat transfer fluid lines could also be circulated through mold ring 37 if desired.

A particularly significant attribute of the system of the present invention is its flexibility in forming glass articles at a wide range of production rates. Production can be varied by utilizing differing numbers of molds in the system depending upon the output required over a given period of time. Such operational flexibility is achieved by providing the system of the present invention with a system controller (not shown) to operate gob discharge station 2, transfer machine 10, molding station 20, transfer machine 38, cooling station 48, and the components thereof to achieve a selected level of production. Such a controller is conventionally in the form of a microprocessor having various production operating programs stored in its memory. An example of a suitable microprocessor is an IBM-compatible industrialized personal computer. To facilitate operational control by such a system, the components of the system of the present invention (i.e., gob discharge station 2, transfer machines 10 and 38, molding station 20, and cooling station 48) are linked to the microprocessor by control lines according to techniques well known in the art.

It is also possible to increase production capability and flexibility by utilizing a plurality of systems of the present invention in conjunction with a single gob discharge station.

In such a system, it may be desirable for gob discharge station 2 to be programmed with different gob dispensing instructions. Programmable gob discharge stations are available commercially from BHF or Hartford Empire. The use of a programmable gob discharge station permits the parallel systems of molding stations, cooling stations, and transfer machines each to produce different molded articles. Such articles can be of different weight, and each system can produce different numbers of articles per unit time. This capability provides significant flexibility compared to prior pressing operations.

To facilitate movement of the robots between stations, the distance between the different stations is equalized as much as possible. For example, in FIGURE 1, transfer machine 38 and cooling station 48 are positioned so that, when gripper 46 picks up a mold from mold forming position MP, and transports the mold to CSP1 little, if any, extension of arm 40 is needed, and minimal if any, rotation of gripper connector 42 is needed. At the same time, gripper 44 will be correctly positioned to remove mold M from cooling station position CSP4 and transport it to inversion gripper 45. Preferably, the distance between CSP4 and inversion gripper 45 is such that minimal, if any, extension of arm 40 and minimal, if any, rotation of gripper connector 42, is need during this transportation. Likewise, the distance between the gob dispensing station 4 at mold filling position MFP and the mold forming station MP, as well as the inversion gripper 45, is designed to enable minimal extension of arm 12 and minimal rotation of gripper connector 14 of transfer station 10 during transportation of the various molds between these respective stations.

## Claims

1. A method of forming an article which comprises:
A) providing a mold;
B) depositing a formable material in said mold at a first location;
C) moving said mold from said first location to a fixed forming station; optionally in a three-dimensional path,
D) forming said material into an article having a desired shape at said forming station;
E) moving said mold to a second station;
F) removing said article from said mold after said mold has been deposited at said second station;
G) moving said mold back to said first location; optionally,
H) repeating steps B) through G) for a desired number of cycles.

2. Method according to claim 1, wherein said mold is a female mold, said mold is placed on a fixed anvil at said forming station where it aligns with a male forming member which is moved into the mold to form an article and then is withdrawn, whereupon the mold with the article therein is moved to a cooling station, cooled, and then removed from the mold.

3. Method according to claim 1 or 2, wherein the mold temperature is measured after removal of an article, and the mold temperature is adjusted to a desired value such that it has a preselected temperature at said first location.

4. A method according to claim 3, wherein said male forming member is provided with a passage for circulation of heat transfer fluid, and the method further comprises circulating a fluid through the passage to control the temperature of said male forming member.

5. A method according to claim 3 or 4, wherein said female mold is fixedly aligned with said male forming member to permit correct formation of the article at said molding station.

6. A method according to claim 1, 2, 3, 4 or 5 wherein the formable material is molten glass.

7. A method according to claim 1 or 3 wherein said cooling station has a plurality of cooling positions, which the formed article in said mold moves to in seriatim during said cooling.

8. A method according to claim 7, wherein said cooling comprises:
conveying cooling gas to the cooling positions through cooling passages.

9. A method according to claim 1 or 2, wherein the molten glass is dispensed from a gob discharge station along a path during said depositing, and wherein said depositing comprises:
moving said mold transversely or vertically to the path the gob follows when dispensed from said gob discharge station.

10. A method according to claim 1 or 2, wherein moving said mold back is done with at least one robot, having an arm with a first gripper and a second gripper for grasping the mold during said moving and during moving back to said first location.

11. A method according to claim 10, wherein said moving said mold in 3 dimensions comprises:
grasping, with the first gripper, the mold containing formable material and
releasing the mold containing formable material from the first gripper at said forming station and, wherein said moving said mold back to said first location comprises:
grasping, with the second gripper, an empty mold in inverted position relative to the mold containing formable material released at said forming station with the first gripper and
rotating the robot arm and the second gripper to invert the empty mold and position it for receiving formable material during said depositing.

12. Method according to any one of the preceding claims, comprising the step of manipulating said mold to distribute said deformable material in said mold prior to said forming.

13. A method according to claim 12, wherein said manipulating step comprises, during or after material deposition, moving said mold and/or tilting said mold, optionally transverse or vertically to the direction of movement of said material being deposited in one or more directions.

14. Method according to any one of the preceding claims, wherein cooling passages are provided with valves to regulate volumetric flow of cooling gas to the cooling positions, and the valves are operated by a controller to regulate the volumetric flow of cooling gas through the cooling passages, and/or the cooling gas is cooled indirectly by coolant fluid circulating through a heat exchanger.

15. Apparatus for carrying on the method of any one of the preceding claims, comprising:
a gob discharge station;
at least one article forming station for forming an article of desired shape from the deformable mass contained within a mold positioned in said forming station;
at least one first transfer machine including an arm for gripping a mold, positioning said mold in gob receiving relation to said discharge station, and, after a gob is received in a mold, moving said mold to and depositing said mold on said fixed article forming station;
at least one cooling station for receiving and holding molds containing a formed, hot article;
at least one second transfer machine including an arm for gripping a mold at said forming station and, after an article is molded, moving said mold from said forming station to said cooling station and depositing said mold on said cooling station;
means for removing a mold from said cooling station; and,
means for removing a formed article from a mold which has cooled at said at least one cooling station.

16. Apparatus according to claim 15, wherein said at least one article forming station comprises:
a male forming member having passages for circulation of heat transfer fluid and
means to advance said mold forming member into and out of a mold positioned at said fixed article forming station.

17. A system according to claim 15, wherein said at least one cooling station comprises:
a plurality of cooling positions, to which the molds containing a formed, hot article ar moved in seriatim, optionally further comprising passages for conveying cooling gas to the cooling positions, further optionally valves in each of the cooling passages to regulate volumetric flow of cooling gas to the cooling positions and/or wherein said cooling station further comprises: a heat exchanger through which coolant fluid circulates to cool indirectly the cooling gas.

18. Apparatus according to claim 15, wherein the arm of said at least one first transfer machine is configured to move a mold from said article forming station to said discharge station, while the arm of said at least one second transfer machine is configured to move a mold, after removal of the formed article, to said article forming station, optionally each with two grippers for grasping molds.

19. Apparatus according to claim 15 further comprising:
means to rotate the arms and said grippers of each of said first transfer machine when moving said mold from each of said article forming stations to said gob discharge machine to position said mold in gob receiving relation to said gob discharge machine and/or
means to rotate the arms and said grippers of each of said second transfer machine when moving said mold from one of said cooling stations to one of said article forming stations.

20. A system according to claim 15 further comprising: a controller programmed to operate said system at varying formed article production rates, and/or with varying numbers of molds, and/or with molds of varying configuration.

21. Apparatus according to claim 15, wherein said gob discharge station is programmable, optionally programmed so that at least one of said article forming stations forms a different article or molds a gob of different weight than another of said article forming stations.
